# EUROPEAN PATENT SPECIFICATION

(11) **EP 2 685 328 B1**
(45) Date of publication and mention of the grant of the patent: **05.10.2016**
(21) Application number: 12175687.8
(22) Date of filing: 10.07.2012
(51) Int. Cl.: G05B 19/042

(54) **User interface of an automation system and a method**
Benutzerschnittstelle eines Automatisierungssystems und Verfahren
Interface utilisateur d'un système d'automatisation et procédé

(43) Date of publication of application: 15.01.2014
(73) Proprietor: Siemens Aktiengesellschaft, 80333 München (DE)
(72) Inventor: Gargav, Sumitchandra, 122017 Gurgaon (IN)
(74) Representative: Patentanwaltskanzlei WILHELM & BECK

(56) References cited:
- WO-A1-2009/085534
- WO-A1-2011/128731

## Description

The present invention relates to automation systems and more particularly to a user interface of an automation system adapted to display one or more components controlled by the automation system.

An automation system, such as a power plant automation system is used for automatically controlling a process such as chemical, petroleum and so forth. These automation systems generally consist of individual components, which may include field level components with sensors and actuators, other devices with I/O level, network and communication devices.

The approach in WO 2011/128731 A1 proposes a hierarchical view of process graphics, wherein multiple graphic windows are organized in a tree-structure, wherein an overview graphic constitutes the root of said tree-structure, wherein the overview graphic comprises one or more thumbnails, wherein each thumbnail is associated with a graphic window in said tree-structure, wherein each thumbnail in the overview graphic allows calling the relevant associated graphic window into the foreground, thereby substituting the overview graphic, and wherein a status-change in one of the graphic windows is reflected in a visual status-change of the relevant thumbnail in the overview graphic.

The approach in WO 2009/085534 A1 aims at enabling visual supervision of multiple assay stations by means of obtaining graphical images of each assay station and displaying said images by means of a remote monitor. If the number of images exceeds the viewing area of the remote monitor at least some of the graphical images are displayed in a sliding or scrolling mode.

Typically, a power plant is automatically controlled and monitored by a plurality of individual or interacting control and regulating functions of the automation system. As previously noted the automation system includes a number of data processing units or automation devices. In a large power plant, one or more automation systems which are typically sub-systems may be remotely located to control and monitor various field devices, such as sensors, valves and motors.

Operators working on these automation systems are able to control and view information through a human machine interface (HMI) which enables effective operation and control of the components and processes.

Currently, the operator has to select a required plant display to perform an operation by opening input/output windows such as faceplates from the selected plant display. Similarly, to access another portion of the plant, the operator has to perform similar action which is repetitive and involves wastage of time. Additionally for better viewing of the plant display the operator has to arrange faceplates that were previously opened which is sometimes tedious and time consuming. Furthermore, the current systems do not have a provision to allow the operator to store previously opened displays which might be required frequently in case of same operator activity.

It is therefore an object of the present invention to provide significant ease of use to the operator in an automation system.

The object is achieved by providing a user interface of an automation system according to claim 1, a method for using the user interface according to claim 9 and an automation system according to claim 10.

According to the present invention, a user interface of an automation system adapted to display one or more components controlled by the automation system, the user interface includes a plurality of input interfaces associated with each of the one or more components, a plurality of output interfaces associated with each of the one or more components, a first input trigger adapted to store one or more states of the one or more components along with corresponding input interfaces and output interfaces, and a second input trigger for displaying the stored states of the one or more components. By having a first input trigger the states of the components are stored, which may thereafter be recalled by the second input trigger which displays these stored states in the form of small images or thumbnails, providing the operator/user to quickly select a desired state from the list of displayed states. This arrangement provides a significant ease to the operator during operation saving a significant amount of time. Additionally, it prevents repetitive action by the operator to view the previously viewed or navigated state of the component.

In one embodiment, the stored states of the one or more components are selected by a user. This provides an option to the user to navigate to the desired stored state of the component, without wastage of time.

In one embodiment, the selected state of the one or more component is displayed along with the corresponding input interfaces and the output interfaces. This provides the user to input a required value and also enables the user to see the resulting output related to the component.

In one embodiment, the stored states are presented based upon the instance of storage. Such an arrangement provides the user to navigate to the desired instance and compare the activity of the component with the present operation condition.

In one embodiment, the one or more states of the components comprise a view window. The view window provides the user to view the state of the component visually.

In one embodiment, the first input trigger and/or the second input trigger comprises a control trigger, a text based input trigger or a voice based input trigger. The various options provide a flexibility of use to the user.

In one embodiment, the user interface is a human machine interface which provides a graphics-based visualization of an automation system.

In another embodiment, the user interface is a graphical user interface, a command line interface or a touch user interface. The graphical user interface accepts input via devices such as computer keyboard and mouse and provides articulated graphical output on a display unit. The command line interface provides the input by typing a command string with the computer keyboard and the system provides output by printing text on the display unit. The touch user interface uses touchpad or touch screen display as a combined input and output device. The touch user interface saves a significant amount of time.

In one embodiment, an automation system for one or more components in a plant system, the one or more components in mutual interaction with each other, the automation system includes a control unit for controlling the one or more components, the control unit comprising a processor coupled to a memory, a user interface coupled to the control unit, the user interface comprising a plurality of input interfaces associated with each of the one or more components, a plurality of output interfaces associated with each of the one or more components, a first input trigger adapted to store one or more states of the one or more components along with corresponding input interfaces and output interfaces, a second input trigger for displaying the stored states of the one or more components, and a display unit for displaying the one or more components.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
FIG. 1 is a schematic diagram of an automation system,
FIG. 2 is a schematic diagram of a user interface of the automation system,
FIG. 3 is a schematic diagram of the user interface of FIG. 2 depicting the stored states of one or more components, and
FIG. 4 is a flow diagram depicting a method for displaying the one or more components of a power plant controlled by an automation system using the exemplary user interface of FIG. 2, in accordance with aspects of the present technique.

Embodiments of the present invention relate to an automation system and more particularly to a power plant automation system.

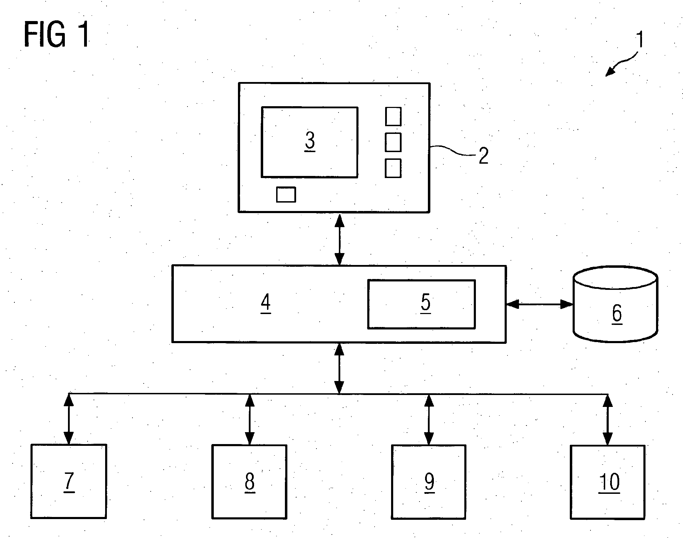

FIG. 1 is a schematic diagram depicting an automation system 1, in accordance with aspects of the present technique. The automation system 1 may be an object based system for controlling an industrial process. Some of these processes may include power generation, power distribution, power transmission, oil or gas production, oil refining, chemical, pharmaceutical, food processing and so forth.

The automation system 1 is adapted to control one or more components 7, 8, 9, 10 of a power plant. These components 7, 8, 9, 10 may be a boiler, a turbine group, a condenser, a liquid storage tank, a feed water pump and so forth. The components 7, 8, 9, 10 are in mutual interaction with each other, which as an example may be connected to each other through a pipeline. Exemplarily, the components 7, 8, 9, 10 may also be in closed connection with each other as in a steam water cycle of a steam turbine, with the cycle including a plurality of components, such as the components 7, 8, 9, 10.

In accordance with aspects of the present technique, the automation system 1 includes a control unit 4 for controlling the one or more components 7, 8, 9, 10. The control unit 4 is typically a computer with software running on it. The control unit 4 includes a processor 5 configured to process data. The processor 5 is coupled to a memory 6 for storing data. The memory 6 may include a random access memory, read only memory, disk drives, tape drives or combinations thereof. The memory 6 is typically a data storage device that may include a hard disk, a floppy disk, a DVD or any other type of data storage device.

It may be noted that the control unit 4 communicates with the components 7, 8, 9, 10 via a bus. The processor 5 of the control unit 4 may also include a program code for controlling the processes in the plant.

A user interface 2 includes a display unit 3 for displaying the states of the one or more components 7, 8, 9, 10 of the plant. It is coupled to the control unit 4. Additionally, the display unit 3 is also configured to display views of the components or sub-systems of the plant.

In accordance with aspects of the present technique, the user interface 2 is a human machine interface. Alternatively, the user interface 2 may also be a touch user interface, a graphical user interface, a command line interface or combinations thereof. The user interface 2 enables a user which is generally an operator to monitor and/or control the process in a plant. Furthermore, the user interface 2 also enables a user to enter data and also view the output associated with the components, the output may include for example pressure in the component, the temperature, air flow rate and so forth.

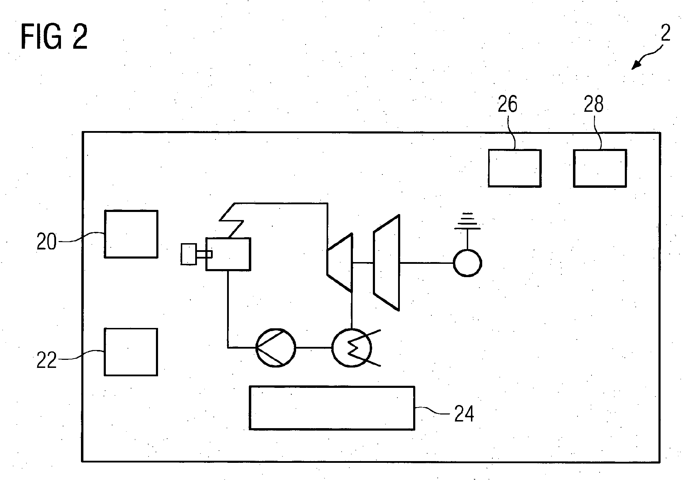

Referring now to FIG. 2, a schematic diagram of the exemplary user interface 2 is depicted. The user interface 2 includes a plurality of input interfaces 20, 22. The input interfaces 20, 22 may be a faceplate for allowing a user to enter data. Faceplates provide access to detailed information from the control unit such as alarm limits or tuning parameters for the components. The input interfaces 20, 22 are associated with each of the components 7, 8, 9, 10 and may be in the form of a text box.

Additionally, the user interface includes a plurality of output interfaces, such as an output interface 24. The output interface 24 is also associated with the components 7, 8, 9, 10 in the plant and depicts the output in the form of graph or a chart depicting a trend of the operation of the component, as an example. Alternatively, the output interface 24 may be a dialog box depicting the current operating parameters of the component, such as but not limited to pressure and temperature.

In accordance with aspects of the present technique, the user interface 2 includes a first input trigger 26 adapted to store one or more states of the one or more components 7, 8, 9, 10 of the plant system. As used herein the term "state" of the component may include a view of the component at an instance of time. The "state" of the component may also include a startup state, a full operation mode state, a shutdown state, a critical state and so forth.

It may further be noted that each state of the component includes corresponding input interfaces and output interfaces associated with the component. The first input trigger 26 is adapted to store the state of the component along with the input interfaces and the output interfaces.

The first input trigger 26 may be a control trigger, a text based input trigger or a voice based input trigger. As an example the first input trigger 26 may be in the form of a virtual click button or a physical button adapted to execute a command, which is to store a present state of the component in the presently contemplated configuration. Alternatively, the first input trigger 26 may also be executed by a voice command by the operator.

The user interface 2 further includes a second input trigger 28 for displaying the stored states of the one or more components including the corresponding input interfaces and output interfaces. The second input trigger 28 may be a control trigger, a text based input trigger or a voice based input trigger. As an example the second input trigger 28 may be in form of a virtual click button or a physical button adapted to execute a command, which is to display the stored states of the one or more components in the presently contemplated configuration. Alternatively, the second input trigger 28 may also be executed by a voice command by the operator.

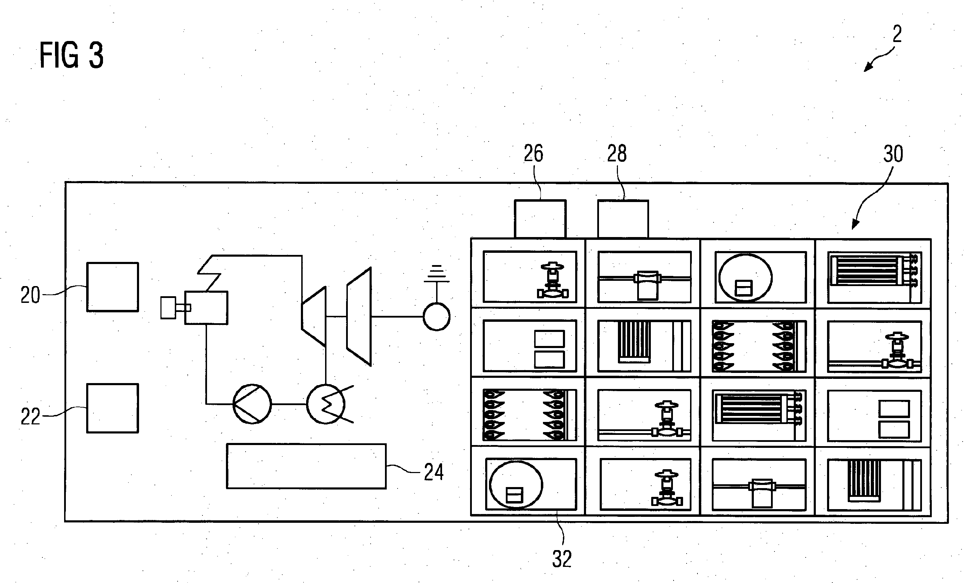

FIG. 3 is a schematic diagram of the exemplary user interface 2 of the automation system 1 displaying the stored states of the one or more components 7, 8, 9, 10. As illustrated, the user interface 2 includes the first input trigger 26 and the second input trigger 28. On executing the second input trigger 28 the stored states of the one or more components are displayed in the form of a view window 30. The view window 30 includes a plurality of views or the states of the components arranged as a matrix. More particularly, the stored states of the one or more components 7, 8, 9, 10 are displayed in the form of thumbnail images, such as the thumbnail image 32 depicting a stored state of a particular component.

These thumbnail images are presented to the user or operator for selection. The user may select the stored state in the form of thumbnail image 32 by using an input device such as a mouse or keyboard. Alternatively, the user may also select the stored state using a touch panel in the display unit 3.

On selecting the thumbnail image 32 depicting the stored state or stored view of the component with the previously arranged input interfaces and output interfaces, the selected state of the component is displayed in the display unit 3 of the user interface 2.

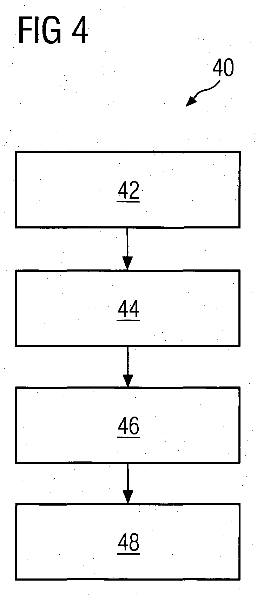

FIG. 4 is a flow diagram depicting an exemplary method 40 for displaying the one or more components of a power plant by an automation system, such as the automation system of FIG. 1.

As previously noted, the automation system includes the user interface 2 adapted to display the one or more components 7, 8, 9, 10 of the power plant controlled by the automation system 1.

In accordance with aspects of the present technique, the exemplary method 40 of displaying the one or more components 7, 8, 9, 10 controlled by the automation system 1 is achieved by using the user interface 2. The method simplifies the operation of the automation system. It helps to save time by providing significant ease of use to the operator. The method is part of the operation process of the automation system.

At step 42, the one or more components 7, 8, 9, 10 controlled by the automation system 1 are displayed including input interfaces and output interfaces associated with each of the one or more components. These components are displayed in the display unit 3. As an example, the components of the power plant may be listed as a tree list in a side bar of the user interface 2, from wherein a desired component may be selected. The selected component along with the input interfaces and the output interfaces is displayed on the display unit.

At step 44, the one or more states of the one or more components 7, 8, 9, 10 of the power plant are stored by using the first input trigger 26, along with the associated input interfaces and the output interfaces of the component. The state of the component is stored in the memory 6 as previously noted.

At step 46, the stored states of the one or more components 7, 8, 9, 10 along with the associated input interfaces and the output interfaces are displayed by triggering the second input trigger 28. It may be noted that the stored states of the one or more components 7, 8, 9, 10 are displayed as a plurality of thumbnail images, such as the thumbnail image 32 in the view window 30.

Subsequently, at step 48, one of the thumbnail images is selected by the user to display the stored state of the component along with the associated input interfaces and the associated output interfaces on the display unit 3. Now the user can continue to operate the power plant by using the stored state of the component.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

### List of reference signs

- 1: automation system
- 2: user interface
- 3: display unit
- 4: control unit
- 5: processor
- 6: memory
- 7-10: components
- 20: input interface
- 22: input interface
- 24: output interface
- 26: first input trigger
- 28: second input trigger
- 30: view window
- 32: thumbnail image
- 40: method
- 42-48: steps of method

## Claims

1. A user interface (2) of an automation system (1) adapted to display one or more components (7, 8, 9, 10) controlled by the automation system (1), the user interface (2) comprising:
- a plurality of input interfaces (20, 22) associated with each of the one or more components (7, 8, 9, 10),
- a plurality of output interfaces (24) associated with each of the one or more components (7, 8, 9, 10),
- a first input trigger (26) adapted to trigger the storing of one or more states of the one or more components (7, 8, 9, 10) along with corresponding input interfaces (20, 22) and output interfaces (24),
- a second input trigger (28) adapted to trigger the displaying of the one or more stored states of the one or more components (7, 8, 9, 10), in a view window (30) for displaying the one or more states of the components (7, 8, 9, 10) in a form of a plurality of thumbnail images.

2. The user interface (2) according to claims 1, wherein the user interface is configured to display a selected state from the stored states of the one or more component (7, 8, 9, 10) along with the corresponding input interfaces and the output interfaces.

3. The user interface (2) according to any of the claims 1 to 2, wherein the user interface is configured to display the stored states based upon an instance of storage.

4. The user interface (2) according to any of the claims 1 to 3, wherein the first input trigger (26) and/or the second input trigger (28) comprises a control trigger, a text based input trigger or a voice based input trigger.

5. The user interface (2) according to any of the claims 1 to 4, wherein the automation system (1) is a power plant automation system.

6. The user interface (2) according to any of the claims 1 to 5, wherein the user interface (2) contains at least one of hardware and software component.

7. The user interface (2) according to any of the claims 1 to 6, comprising a human machine interface.

8. The user interface (2) according to any of the claims 1 to 7, comprising a graphical user interface, a command line interface or a touch user interface.

9. A method (40) for displaying one or more components (7, 8, 9, 10) controlled by an automation system (1) using a user interface (2), the method (40) comprising:
- storing (44) one or more states of the one or more components along with an associated input interface and an output interface via a first input trigger (26), and
- displaying (46) the one or more stored states of the one or more components via a second input trigger (28) in a form of a plurality of thumbnail images in a view window (30), and
- selecting (48) one of the thumbnail images in the view window (30) to display the stored state of the component in a display unit.

10. An automation system (1) for controlling one or more components (7, 8, 9, 10) in a plant system, the one or more components in mutual interaction with each other, the automation system (1) comprising:
- a control unit (4) for controlling the one or more components (7, 8, 9, 10), the control unit (4) comprising a processor (5) coupled to a memory (6),
- a user interface (2) coupled to the control unit (4), according to claim 1, and
- a display unit (3) for displaying the one or more states of the components (7, 8, 9, 10).

11. The automation system (1) according to claim 10, wherein the one or more states of the one or more components (7, 8, 9, 10) are stored in the memory (6).

12. The automation system (1) according to any of the claims 10 to 11, wherein the user interface is configured to display the stored states of the one or more components (7, 8, 9, 10) in a view window (30).

13. The automation system (1) according to any of the claims 10 to 12, wherein the user interface is configured to display a selected state of the one or more component (7, 8, 9, 10) along with the corresponding input interfaces and the output interfaces in the display unit (3).

## Patentansprüche

1. Benutzerschnittstelle (2) eines Automatisierungssystems (1), die angepasst ist, um eine oder mehrere durch das Automatisierungssystem (1) gesteuerte Komponenten (7, 8, 9, 10) anzuzeigen, wobei die Benutzerschnittstelle (2) Folgendes umfasst:
- eine Vielzahl von Eingabeschnittstellen (20, 22), die mit jeder der einen oder der mehreren Komponenten (7, 8, 9, 10) assoziiert sind,
- eine Vielzahl von Ausgabeschnittstellen (24), die mit jeder der einen oder der mehreren Komponenten (7, 8, 9, 10) assoziiert sind,
- einen ersten Eingabeauslöser (26), der angepasst ist, um die Speicherung eines oder mehrerer Zustände der einen oder der mehreren Komponenten (7, 8, 9, 10) nebst entsprechenden Eingabeschnittstellen (20, 22) und Ausgabeschnittstellen (24) auszulösen,
- einen zweiten Eingabeauslöser (28), der angepasst ist, um die Anzeige des einen oder der mehreren gespeicherten Zustände der einen oder der mehreren Komponenten (7, 8, 9, 10) in einem Ansichtsfenster (30) zum Anzeigen des einen oder der mehreren Zustände der Komponenten (7, 8, 9, 10) in Form einer Vielzahl von Thumbnail-Bildern auszulösen.

2. Benutzerschnittstelle (2) nach Anspruch 1, wobei die Benutzerschnittstelle konfiguriert ist, um einen ausgewählten Zustand aus den gespeicherten Zuständen der einen oder der mehreren Komponenten (7, 8, 9, 10) nebst den entsprechenden Eingabeschnittstellen und den Ausgabeschnittstellen anzuzeigen.

3. Benutzerschnittstelle (2) nach einem der Ansprüche 1 bis 2, wobei die Benutzerschnittstelle konfiguriert ist, um die gespeicherten Zustände basierend auf einer Speicherinstanz anzuzeigen.

4. Benutzerschnittstelle (2) nach einem der Ansprüche 1 bis 3, wobei der erste Eingabeauslöser (26) und/oder der zweite Eingabeauslöser (28) einen Steuerungsauslöser, einen textbasierten Eingabeauslöser oder einen sprachbasierten Eingabeauslöser umfassen.

5. Benutzerschnittstelle (2) nach einem der Ansprüche 1 bis 4, wobei das Automatisierungssystem (1) ein Kraftanlagenautomatisierungssystem ist.

6. Benutzerschnittstelle (2) nach einem der Ansprüche 1 bis 5, wobei die Benutzerschnittstelle (2) eine Hardware- und/oder eine Softwarekomponente enthält.

7. Benutzerschnittstelle (2) nach einem der Ansprüche 1 bis 6, die eine Mensch-Maschine-Schnittstelle umfasst.

8. Benutzerschnittstelle (2) nach einem der Ansprüche 1 bis 7, die eine grafische Benutzerschnittstelle, eine Kommandozeilenschnittstelle oder eine berührungsempfindliche Benutzerschnittstelle umfasst.

9. Verfahren (40) zum Anzeigen einer oder mehrerer durch ein Automatisierungssystem (1) gesteuerter Komponenten (7, 8, 9, 10) durch Nutzung einer Benutzerschnittstelle (2), wobei das Verfahren (40) Folgendes umfasst:
- Speichern (44) eines oder mehrerer Zustände der einen oder der mehreren Komponenten nebst einer assoziierten Eingabeschnittstelle und einer Ausgabeschnittstelle über einen ersten Eingabeauslöser (26) und
- Anzeigen (46) des einen oder der mehreren gespeicherten Zustände der einen oder der mehreren Komponenten über einen zweiten Eingabeauslöser (28) in Form einer Vielzahl von Thumbnail-Bildern in einem Ansichtsfenster (30) und
- Auswählen (48) eines der Thumbnail-Bilder im Ansichtsfenster (30), um den gespeicherten Zustand der Komponente in einer Anzeigeeinheit anzuzeigen.

10. Automatisierungssystem (1) zum Steuern einer oder mehrerer Komponenten (7, 8, 9, 10) in einem Anlagensystem, wobei die eine oder die mehreren Komponenten untereinander zusammenwirken, wobei das Automatisierungssystem (1) Folgendes umfasst:
- eine Steuereinheit (4) zum Steuern der einen oder der mehreren Komponenten (7, 8, 9, 10), wobei die Steuereinheit (4) einen an ein Speicherelement (6) gekoppelten Prozessor (5) umfasst,
- eine an die Steuereinheit (4) gekoppelte Benutzerschnittstelle (2) nach Anspruch 1 und
- eine Anzeigeeinheit (3) zum Anzeigen des einen oder der mehreren Zustände der Komponenten (7, 8, 9, 10).

11. Automatisierungssystem (1) nach Anspruch 10, wobei der eine oder die mehreren Zustände der einen oder der mehreren Komponenten (7, 8, 9, 10) im Speicherelement (6) gespeichert sind.

12. Automatisierungssystem (1) nach einem der Ansprüche 10 bis 11, wobei die Benutzerschnittstelle konfiguriert ist, um die gespeicherten Zustände der einen oder der mehreren Komponenten (7, 8, 9, 10) in einem Ansichtsfenster (30) anzuzeigen.

13. Automatisierungssystem (1) nach einem der Ansprüche 10 bis 12, wobei die Benutzerschnittstelle konfiguriert ist, um einen ausgewählten Zustand der einen oder der mehreren Komponenten (7, 8, 9, 10) nebst den entsprechenden Eingabeschnittstellen und den Ausgabeschnittstellen in der Anzeigeeinheit (3) anzuzeigen.

## Revendications

1. Interface utilisateur (2) d'un système d'automatisation (1) adaptée pour afficher un ou plusieurs composants (7, 8, 9, 10) commandés par le système d'automatisation (1), l'interface utilisateur (2) comprenant :
- une pluralité d'interfaces d'entrée (20, 22) associées à chacun des un ou plusieurs composants (7, 8, 9, 10),
- une pluralité d'interfaces de sortie (24) associées à chacun des un ou plusieurs composants (7, 8, 9, 10),
- un premier déclencheur d'entrée (26) adapté pour déclencher la mémorisation d'un ou de plusieurs états des un ou plusieurs composants (7, 8, 9, 10) ainsi que des interfaces d'entrée (20, 22) et interfaces de sortie (24) correspondantes,
- un second déclencheur d'entrée (28) adapté pour déclencher l'affichage des un ou plusieurs états mémorisés des un ou plusieurs composants (7, 8, 9, 10), dans une fenêtre de visualisation (30) pour afficher les un ou plusieurs états des composants (7, 8, 9, 10) sous forme d'une pluralité d'imagettes.

2. Interface utilisateur (2) selon la revendication 1, l'interface utilisateur étant configurée pour afficher un état sélectionné parmi les états mémorisés des un ou plusieurs composants (7, 8, 9, 10) ainsi que les interfaces d'entrée et les interfaces de sortie correspondantes.

3. Interface utilisateur (2) selon l'une quelconque des revendications 1 à 2, l'interface utilisateur étant configurée pour afficher les états mémorisés en fonction d'une instance de mémorisation.

4. Interface utilisateur (2) selon l'une quelconque des revendications 1 à 3, dans laquelle le premier déclencheur d'entrée (26) et/ou le second déclencheur d'entrée (28) comprend un déclencheur de commande, un déclencheur d'entrée basé sur le texte ou un déclencheur d'entrée basé sur la voix.

5. Interface utilisateur (2) selon l'une quelconque des revendications 1 à 4, dans lequel le système d'automatisation (1) est un système d'automatisation d'une centrale électrique.

6. Interface utilisateur (2) selon l'une quelconque des revendications 1 à 5, l'interface utilisateur (2) contenant au moins l'un d'un composant matériel et d'un composant logiciel.

7. Interface utilisateur (2) selon l'une quelconque des revendications 1 à 6, comprenant une interface homme-machine.

8. Interface utilisateur (2) selon l'une quelconque des revendications 1 à 7, comprenant une interface utilisateur graphique, une interface de ligne de commande ou une interface utilisateur tactile.

9. Procédé (40) d'affichage d'un ou plusieurs composants (7, 8, 9, 10) commandés par un système d'automatisation (1) au moyen d'une interface utilisateur (2), le procédé (40) comprenant :
- la mémorisation (44) d'un ou de plusieurs états des un ou plusieurs composants ainsi que d'une interface d'entrée et d'une interface de sortie associées par l'intermédiaire d'un premier déclencheur d'entrée (26), et
- l'affichage (46) des un ou plusieurs états mémorisés des un ou plusieurs composants par l'intermédiaire d'un second déclencheur d'entrée (28) sous forme d'une pluralité d'imagettes dans une fenêtre de visualisation (30), et
- la sélection (48) de l'une des imagettes dans la fenêtre de visualisation (30) pour afficher l'état mémorisé du composant dans une unité d'affichage.

10. Système d'automatisation (1) pour commander un ou plusieurs composants (7, 8, 9, 10) dans un système industriel, les un ou plusieurs composants interagissant mutuellement les uns avec les autres, le système d'automatisation (1) comprenant
- une unité de commande (4) pour commander les un ou plusieurs composants (7, 8, 9, 10), l'unité de commande (4) comprenant un processeur (5) couplé à une mémoire (6),
- une interface utilisateur (2) couplée à l'unité de commande (4), selon la revendication 1, et
- une unité d'affichage (3) pour afficher les un ou plusieurs états des composants (7, 8, 9, 10).

11. Système d'automatisation (1) selon la revendication 10, dans lequel les un ou plusieurs états des un ou plusieurs composants (7, 8, 9, 10) sont mémorisés dans la mémoire (6).

12. Système d'automatisation (1) selon l'une quelconque des revendications 10 à 11, dans lequel l'interface utilisateur est configurée pour afficher les états mémorisés des un ou plusieurs composants (7, 8, 9, 10) dans une fenêtre de visualisation (30).

13. Système d'automatisation (1) selon l'une quelconque des revendications 10 à 12, dans lequel l'interface utilisateur est configurée pour afficher un état sélectionné des un ou plusieurs composants (7, 8, 9, 10) ainsi que les interfaces d'entrée et les interfaces de sortie correspondantes dans l'unité d'affichage (3).
